(19) Europäisches Patentamt
European Patent Office
Office européen des brevets

(11) EP 2 961 599 B1

(12) **FASCICULE DE BREVET EUROPEEN**

(45) Date de publication et mention de la délivrance du brevet:
**26.04.2017 Bulletin 2017/17**

(21) Numéro de dépôt: **14710039.0**

(22) Date de dépôt: **27.02.2014**

(51) Int Cl.:
***B32B 17/10*** (2006.01) ***C03C 17/34*** (2006.01)
***G02B 27/00*** (2006.01) ***G02B 27/01*** (2006.01)
***G02B 1/11*** (2015.01)

(86) Numéro de dépôt international:
**PCT/FR2014/050427**

(87) Numéro de publication internationale:
**WO 2014/131998 (04.09.2014 Gazette 2014/36)**

(54) **DISPOSITIF DE VISUALISATION POUR VITRAGES TRANSPARENTS**

ANZEIGEVORRICHTUNG FÜR TRANSPARENTE VERGLASUNG

DISPLAY DEVICE FOR TRANSPARENT GLAZING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2013 FR 1351825**

(43) Date de publication de la demande:
**06.01.2016 Bulletin 2016/01**

(73) Titulaire: **Saint-Gobain Glass France**
**92400 Courbevoie (FR)**

(72) Inventeur: **JOSEPH, Camille**
**F-75010 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 2 515 157**
**EP-A2- 2 131 227**
**WO-A1-2009/122094**
**WO-A1-2010/139889**
**WO-A1-2013/029888**
**FR-A1- 2 922 328**
**US-A1- 2010 253 600**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte au domaine des systèmes de visualisation projetés sur des écrans transparents, en particulier les pare-brises automobile ou les vitrages pour bâtiment.

Tout particulièrement, même si elle n'y est pas limitée, la présente invention se rapporte au domaine des systèmes de visualisation d'images, par exemple les systèmes de visualisation dits tête haute, appelès HUD ou Head Up Display dans la technique. De tels systèmes de visualisation d'images sont utiles notamment dans les cockpits d'avion, les trains mais également aujourd'hui dans les véhicules automobiles des particuliers (voitures, camions, etc.) ainsi que dans l'affichage d'information sur panneaux transparents (vitrines commerciales, facades...). L'invention concerne en particulier les dispositifs d'affichage sur substrat à fonction verrière se caractérisant par la formation d'une image réelle à partir d'un projecteur laser.

Dans de tels systèmes, le vitrage est en général constitué d'une structure en sandwich, comprenant le plus simplement deux feuilles de matière résistante telles que des feuilles de verre. Les feuilles de matière résistante sont reliées entre elles par un feuillet intercalaire thermoformable comprenant ou constitué par le plus souvent du polyvinylbutyral (PVB).

Ces systèmes de visualisation tête haute, qui permettent d'afficher des informations projetées sur un vitrage qui se réfléchissent vers le conducteur ou l'observateur sont déjà connus. Ces systèmes permettent notamment d'informer le conducteur du véhicule sans que celui-ci éloigne son regard du champ de vision en avant du véhicule, ce qui permet d'accroître grandement la sécurité.

De la manière la plus ancienne, on obtient une telle image en projetant une information sur un pare-brise ayant une structure feuilletée, c'est à dire formée de deux feuilles de verre et d'un intercalaire en matière plastique. Le conducteur perçoit une image virtuelle qui se situe à une certaine distance derrière le pare-brise. Cependant le conducteur observe alors une image double: une première image réfléchie par la surface du pare-brise orientée vers l'intérieur de l'habitable et une seconde image par réflexion de la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle. Selon un tel procédé, on cherche donc à maximiser la réflexion lumineuse à la surface du verre pour obtenir l'intensité maximale du signal projeté sur la surface du vitrage. La demande de brevet EP 2 131 227, pour un tel type de vitrage et dans le but de supprimer le phénomène de l'image double, enseigne d'apposer sur l'une des faces d'un substrat verrier du vitrage un revêtement antireflet dans le but de supprimer sur la réflexion sur l'une des faces et par suite le phénomène de la double image.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde peut être dans le domaine de l'ultraviolet ou de l'IR. Les luminophores, sous cette radiation incidente, réémettent un rayonnement dans le domaine du visible. On parle alors de down conversion lorsque le rayonnement incident est l'UV et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur l'ensemble d'une surface principale d'un des feuillets constituant le vitrage feuilleté (PVB ou verre) sous la forme d'une couche continue comprenant plusieurs types de luminophores. L'image recherchée est obtenue par l'excitation sélective d'une aire déterminée de la couche de luminophore. La localisation de l'image et sa forme sont obtenues au moyen d'une source d'excitation pilotée et modulée par des moyens extérieurs.

Les expériences menées par le demandeur ont montré que de tels dispositifs HUD, incorporant des luminophores dans le vitrage assemblé, se caractérisent par une luminance trop faible sous une source d'excitation UV conventionnelle. Pour obtenir une luminance et donc une visibilité suffisante du signal projeté sur le pare-brise, notamment dans des conditions de fortes insolations, il est nécessaire d'utiliser des sources lumineuses non conventionnelles, c'est-à-dire générant des faisceaux de rayons concentrés du type laser ou diode électroluminescente.

On peut notamment utiliser des sources excitatrices générant une lumière UV concentrée et dirigée, délivrée par des sources plus spécifiques du type diode laser. Par concentré, il est entendu au sens de la présente description que la puissance surfacique, au niveau du vitrage, du faisceau issu de la source génératrice est supérieure à 120 $mW.cm^{-2}$ et de préférence comprise entre 200 $mW.cm^{-2}$ et 20 000 $mW.cm^{-2}$, voire comprise entre 500 $mW.cm^{-2}$ et 10 000 $mW.cm^{-2}$.

La demande WO2010/139889 décrit l'utilisation d'un matériau du type matériau luminophore du type hydroxy-téréphthalate présentant une forte luminance assurée par un bon rendement quantique sous une excitation UV incidente et une bonne durabilité aux tests de vieillissement sous excitation laser UV. La demande de brevet WO2009/122094 décrit l'application d'une couche d'un matériau connu comme antireflet pour la radiation excitatrice utilisée, dans le but d'améliorer le contraste visuel d'un pictogramme pré-imprimé dans le vitrage, dans des conditions de forte luminosité extérieure.

Cependant, l'utilisation de telles sources ne peut être envisagée qu'à des puissances qui restent plafonnées, afin d'éviter les problèmes liés à la dangerosité du faisceau, dans un premier temps à l'extérieur du véhicule, En particulier, en travaillant avec une longueur d'onde proche de 400 nm, on peut éviter le passage de la majeure partie du rayonnement laser vers l'extérieur car à ces longueurs d'onde le PVB absorbe fortement le rayonnement UV.

Cependant la puissance du rayonnement laser lumineux incident est apparue être également très dangereuse pour les passagers présents dans l'habitacle, en particulier pour le conducteur du véhicule, du fait de la réflexion se produisant sur les surfaces verrières du vitrage formant le pare-brise. Une telle réflexion fait courir un risque de lésion oculaire et de brûlure aux occupants du véhicule. Cette réflexion, notamment la réflexion spéculaire, peut être relativement élevée (de l'ordre de quelques pourcents), si l'on tient compte notamment de la courbure et de l'inclinaison d'un pare-brise. Ce danger est d'autant plus important que la source lumineuse doit émettre un rayonnement initial très puissant pour que le conducteur puisse percevoir l'information avec un contraste suffisant pour être lue très rapidement.

La présente invention se rapporte à un dispositif permettant d'assurer la sécurité des passagers notamment au sens de la norme IEC 60825-1 (relative à la sécurité des installations équipées d'un laser), et permettant au final de diminuer l'intensité lumineuse réfléchie du rayonnement incident par le substrat à fonction verrière, notamment d'un facteur supérieur ou égal à 10.

En particulier, il a été trouvé par la société déposante qu'une telle sécurisation du système pouvait être obtenue par le choix spécifique d'un revêtement antireflet, notamment par un choix approprié des matériaux le composant et de leur disposition.

La prise en compte de ces paramètres selon la méthode selon la présente invention permet de limiter très sérieusement les problèmes de sécurité liés à l'utilisation de source laser pour la visualisation d'image sur un vitrage, notamment un pare-brise ou une vitrine.

Plus précisément, la présente invention se rapporte à un dispositif de visualisation d'une image réelle sur un vitrage équipant un habitacle ou une façade, ledit dispositif comprenant :

- une source d'un rayonnement laser monochromatique polarisé transverse magnétique de longueur d'onde comprise entre 380 et 410 nm, en particulier entre 395 et 410 nm, notamment proche ou égal à 405 nm,
- ledit vitrage dont au moins une portion comprend un luminophore absorbant ledit rayonnement pour réémettre une lumière dans le domaine du visible et la visualisation de l'image,

ladite source de rayonnement (c'est-à-dire le faisceau de rayonnement chromatique incident) étant orientée vers ladite portion dudit vitrage et balayant celle-ci selon un angle moyen $\theta$ par rapport à la normale audit vitrage.

Selon l'invention, le vitrage est muni sur sa face exposée à ladite source d'un revêtement antireflet constitué par un empilement de deux couches dont :

- une première couche dont l'indice de réfraction optique pour le rayonnement monochromatique incident est compris entre environ 1,9 et environ 2,1, et de préférence est compris entre 1,95 et 2,10, en particulier faite dans un matériau à base d'oxyde de zinc, d'oxyde d'étain, de nitrure de silicium, d'un oxyde mixte de zinc et d'étain ($Sn_xZn_yO$), d'un oxyde mixte de silicium et de zirconium ($Si_xZr_yO$), cette première couche ayant une épaisseur $Ep_1$,
- une deuxième couche dont l'indice de réfraction optique pour le rayonnement monochromatique incident comprise entre 1.5 et 1,6, notamment sensiblement égal à 1,54, en particulier faite dans un matériau à base d'un oxyde de silicium, comprenant éventuellement en outre du carbone et/ou de l'azote et/ou de l'aluminium, cette deuxième couche ayant une épaisseur $Ep_2$.

Les épaisseurs géométriques respectives $Ep_1$ et $Ep_2$ desdites couches sont sensiblement égales à :

- pour la première couche :

$$Ep_1 = 26 + 0,07(\theta) - 0,007(\theta)^2 \quad (1)$$

- pour la deuxième couche :

$$Ep_2 = 83 - 0,1(\theta) + 0,01(\theta)^2 \quad (2).$$

Dans les formules (1) et (2) précédentes, θ est donné en degré (°).

Le vitrage selon l'invention présente idéalement, sur sa face exposée au rayonnement incident, un indice de réfraction compris entre 1,5 et 1,6, notamment sensiblement égal à 1.54 pour ledit rayonnement monochromatique.

Au sens de la présente invention, on entend par « vitrage » classiquement un élément de séparation comprenant au moins une feuille ou un panneau de verre mais également tout substrat transparent susceptible d'être utilisé en remplacement de tels panneaux de verre pour assurer la même fonction, en particulier les feuilles plastiques notamment du type polycarbonate. Un vitrage selon l'invention, notamment pour une application HUD, peut notamment consister en un vitrage feuilleté, constitué par deux substrats ou feuilles de verre liés par un intercalaire plastique par exemple du type PVB.

Au sens de la présente invention, on entend par angle moyen θ la moyenne des angles formés par le faisceau incident émis par la source sur toute la zone de balayage couverte par le rayonnement laser sur ledit vitrage, par rapport à la normale en chaque point d'impact, en tenant compte de sa courbure et de son inclinaison.

Au sens de la présente invention, on entend par « sensiblement égales » que les épaisseurs desdites couches sont égales ou proches des valeurs exactes obtenues par l'application des deux formules précédentes, c'est-à-dire comprises dans une gamme comprise entre plus ou moins 5 nanomètres autour de ladite valeur exacte donnée par les formules (1) et (2), et de préférence comprise entre plus ou moins 4 nanomètres voire de manière très préférée dans une gamme comprise entre plus ou moins 3 nanomètres autour de ladite valeur exacte.

Au sens de la présente invention, on entend par les expressions « matériau à base de » ou « à base de » que la couche est constituée essentiellement dudit matériau, c'est-à-dire qu'elle est constituée pour l'essentiel dudit matériau (c'est-à-dire par exemple d'au moins 80% poids dudit matériau, voire au moins 90% dudit matériau), mais peut tout de même comprendre d'autres matériaux ou composés, mais dans une quantité limitée de telle manière que son indice de réfraction n'est pas sensiblement affecté par leur présence ou en tout état de cause demeure dans les gammes reportées précédemment. A titre d'exemple, les couches en nitrure ou en oxyde de silicium selon l'invention peuvent comprendre une partie substantielle d'aluminium, incorporé de façon connue dans la cible de silicium utilisé initialement pour l'obtention de ladite couche par les techniques de pulvérisation cathodique (la cible comprenant alors en général de l'ordre de 8% poids d'aluminium).

Selon certains modes de réalisations avantageux de la présente méthode qui le cas échéant peuvent bien évidemment être combinés entre eux:

- La source génère un rayonnement laser égal à 405 nm.
- La source comprend au moins une diode laser.
- Ledit vitrage est un vitrage feuilleté du type pare-brise pour automobile ou vitrage pour bâtiment, comprenant un assemblage d'au moins deux feuilles transparentes de verre inorganique ou d'une matière organique résistante, reliées entre elles par un intercalaire d'une matière thermoformable ou par des feuillets multicouches incorporant un tel intercalaire, ledit matériau luminophore étant intégré dans ledit intercalaire, permettant ladite visualisation.
- ladite source de rayonnement étant orientée vers ledit vitrage selon un angle moyen θ compris entre 0° et 50°, par exemple entre 10 et 40°, par rapport à la normale audit vitrage au point d'impact.
- La matière thermoformable constituant ledit intercalaire est choisie dans le groupe des PVB, des PVC plastifiés, du polyuréthane PU ou des éthylènes vinyle acétate EVA.
- La première couche est à base de nitrure de silicium.
- La première couche est à base d'un oxyde mixte d'étain et de zinc, notamment dont le rapport Sn/Zn est compris entre 50/50 et 85/15, de préférence entre 55/45 et 75/25.
- Ledit luminophore est un hydroxyalkyltéréphthalate R-OOC-$\phi(OH)_x$-COOR, de formule développée :

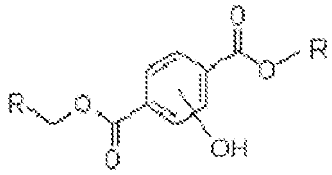

dans laquelle ϕ désigne un noyau benzénique substitué par au moins un groupement hydroxy (OH), R est une chaine hydrocarbonée comprenant de 1 à 10 atomes et x est égal à 1 ou 2, en particulier le diéthyl-2,5-dihydroxytèréphthalate.

La présente invention se rapporte également à un habitacle de véhicule automobile comprenant un dispositif de visualisation tel que précédemment décrit, notamment un dispositif de visualisation dit tête haute (HUD) comprenant un vitrage feuilleté et une source émettant un faisceau d'un rayonnement concentré et directionnel du type laser dirigé vers la portion dudit vitrage comprenant ledit luminophore.

Enfin, la présente invention se rapporte à une méthode de mise en oeuvre d'un dispositif de visualisation d'une image réelle sur un vitrage équipant un habitacle ou une façade, comprenant une source d'un rayonnement laser monochromatique polarisé transverse magnétique compris entre 380 et 410 nm, en particulier entre 395 et 410 nm, orientée vers la ou lesdites portions, et ledit vitrage dont au moins une portion comprend un luminophore absorbant ledit rayonnement pour réémettre une lumière dans le domaine du visible et la visualisation de l'image, ladite source de rayonnement étant orientée vers ledit vitrage et balayant celui-ci selon un angle moyen 0 par rapport à la normale audit vitrage, dans lequel on applique sur la face du vitrage exposée à ladite source un revêtement antireflet constitué par un empilement de deux couches dont, à partir du substrat à fonction verrière, en particulier d'indice de réfraction optique compris entre 1,5 et 1,6, notamment sensiblement égal à 1,54, pour le rayonnement monochromatique :

- une première couche faite dans un matériau à base d'oxyde de zinc, d'oxyde d'étain, de nitrure de silicium, d'un oxyde de zinc et d'étain, d'un oxyde de silicium et de zirconium en particulier dont l'indice de réfraction optique pour le rayonnement monochromatique incident est compris entre environ 1,9 et environ 2,1, et de préférence est compris entre 1,95 et 2,10, cette première couche ayant une épaisseur $Ep_1$,
- une deuxième couche faite dans un matériau à base d'un oxyde de silicium, comprenant éventuellement en outre du carbone et/ou de l'azote et/ou de l'aluminium, en particulier d'indice de réfraction optique, pour le rayonnement monochromatique incident, compris entre 1,5 et 1,6, notamment sensiblement égal à 1,54, cette deuxième couche ayant une épaisseur $Ep_2$.

Selon ladite méthode, les épaisseurs géométriques respectives $Ep_1$ et $Ep_2$ desdites couches sont sensiblement égales à :

- pour la première couche :

$$Ep_1 = 26 + 0,07(\theta) - 0,007\ (\theta)^2 \qquad (1)$$

- pour la deuxième couche :

$$Ep_2 = 83 - 0,1(\theta) + 0,01\ (\theta)^2 \qquad (2)$$

L'invention et ses avantages seront mieux compris à la lecture du mode de réalisation de l'invention qui suit, en relation avec la figure 1 ci-jointe.

Sur cette figure 1, on a schématisé un pare-brise et un dispositif disposé dans un habitacle d'un véhicule automobile (non représenté) :

Le pare-brise 1 se compose de deux feuilles 2 et 9 typiquement en verre mais qui pourraient également être constituées de feuillets de matière plastique résistante du type polycarbonate. Entre les deux feuillets, est présent un feuillet intercalaire plastique 3 tel que du PVB (polyvinylbutyral), du PVC plastifié, PU ou EVA ou bien encore un feuillet thermoplastique mutticouche incorporant par exemple du PET (polyéthylène téréphtalate), dont la succession des couches est par exemple PVB/PET/PVB.

Sur au-moins une partie de la face interne du feuillet thermoplastique intercalaire 3 ont été déposées avant feuilletage, c'est-à-dire avant l'assemblage des différents feuillets, des particules de luminophore organique du type téréphtalate selon l'invention.

Les particules de luminophore présentent une répartition de taille majoritairement comprise entre 1 et 100 microns. Par majoritairement il est entendu que plus de 90% des particules composant la poudre commerciale ont un diamètre compris entre 1 et 100 microns. De manière préférée, les particules de luminophore du type téréphtalate subissent un traitement préalable favorisant leur imprégnation dans le feuillet thermoplastique de PUB. Plus précisément, les particules sont préalablement enrobées dans un liant à base de PVB.

Une source laser 4 émettant un rayonnement lumineux d'excitation est utilisée pour envoyer un rayonnement concentré incident 7 polarisé transverse magnétique de longueur d'onde égale à 405 nm vers une portion 10 du pare-brise sur laquelle l'image réelle doit être générée. La source ou projecteur laser comprend par exemple un polariseur permettant de polariser le faisceau incident, de telle façon que son champ électromagnétique soit transverse magnétique. Au sens de la présente invention, on entend par transverse magnétique un rapport des polarisations TM:TE d'au moins 100:10, de préférence d'au moins 100:1 (TM : transverse magnétique ; TE : transverse électrique).

Au moins cette portion 10 du vitrage comprend un luminophore adapté. Le luminophore est avantageusement du type hydrotéréphtalate tel que décrit dans la demande WO2010/139889, par exemple solvaté sous forme moléculaire dans le feuillet thermoplastique intercalaire 3. Le luminophore présente un fort coefficient d'absorption du rayonnement incident. Il réémet ensuite un rayonnement dans le domaine visible, c'est-à-dire un rayonnement proche de 450 nm avec un rendement supérieur à 80%.

Le rayonnement visible émis par le luminophore est alors directement observable par l'oeil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

Selon l'invention, la source utilisée pour générer le rayonnement concentré est de préférence une source du type UV laser. Elle est par exemple mais non limitativement du type laser à solide, diode laser à semi-conducteurs, lasers à gaz, lasers à colorant, laser à excimère. De manière générale toute source connue générant un flux concentré et dirigé, au sens de la présente invention, d'un rayonnement UV peut être utilisée comme source d'excitation selon l'invention. Alternativement, les sources de lumière incohérente telles que les diodes électroluminescentes peuvent aussi être utilisées, de préférence de puissance et dans le domaine du proche UV.

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV un dispositif tel que décrit dans la demande US2004/0232826, notamment tel que décrit en connexion avec la figure 3.

L'utilisation de tels systèmes permet d'illuminer des portions spécifiques du vitrage par le rayonnement laser, pour y faire apparaître toute information utile au conducteur dans sa conduite, notamment pour sa sécurité, ou encore pour se diriger.

Le mode de réalisation qui précède n'est bien évidemment en aucune façon limitatif de la présente invention, sous aucun des aspects précédemment décrits.

Selon l'invention, l'illumination de la zone considérée peut être obtenue par un dispositif fonctionnant par balayage rapide de ladite zone par la source ou par activation simultanée de pixels dans ladite zone au moyen d'une pluralité de miroirs soumis à ladite source.

En particulier, selon un premier mode, on utilisera un projecteur à base de micro-miroir MEMS avec une source laser. Selon un autre mode, on utilisera les projecteurs à base de matrices DLP, LCD ou LCOS avec une source laser ou LED. Alternativement il est possible selon l'invention d'utiliser un projecteur à base de miroirs montés sur des galvanomètres réfléchissants une source laser.

Pour assurer la sécurité dans l'habitacle lorsque le dispositif est en fonctionnement, la principale difficulté réside dans la partie réfléchie du rayonnement sur la surface du pare brise qui peut être, en première approximation, relativement élevée et dirigée vers les yeux des passagers, en tenant compte notamment de l'inclinaison et de la courbure du pare-brise feuilleté dans la zone illuminée par le faisceau incident

Selon l'invention un revêtement anti-reflet 8 spécifique, du type décrit précédemment, est appliqué sur la surface interne du vitrage feuilleté, c'est-à-dire sur la face du vitrage tournée vers l'habitacle du véhicule. Le revêtement AR est appliqué au moins sur la zone du vitrage en regard de la portion 10 du pare-brise comprenant le matériau luminophore.

Les exemples qui suivent, basés sur le mode de réalisation qui vient d'être décrit pour différents types de revêtements antireflets, montrent les avantages obtenus par la mise en oeuvre de la présente invention, dans le but de minimiser les risques précédemment décrits pour les passagers du véhicule, par une diminution sensible de la réflexion du faisceau issu de la source à la surface du pare-brise, notamment sous un angle d'incidence compris entre 0 et 50°.

**Exemples :**

Dans les exemples qui suivent, on reproduit la réalisation décrite précédemment en relation avec la figure 1, dans lequel le pare-brise feuilleté 1 comprenant le luminophore est illuminé par la source ou projecteur 4 du rayonnement laser à 405 nm polarisé transverse magnétique qui illumine une portion 10 du vitrage.
Le vitrage utilisé est un pare-brise comprenant :

- une première feuille externe constituée par un verre teinté dont la couleur apparaît légèrement verre,
- une deuxième feuille interne constituée par un verre clair commercialisé sous la référence Planilux® par la société déposante,
- un intercalaire de polyvinylbutyral fondue entre les deux feuilles et assurant la liaison entre les deux feuilles de verre.

Sur l'intercalaire de PVB est déposé préalablement à l'assemblage de la structure feuilleté un matériau luminophore du type hydroxytéréphthalate (diéthyl-2,5-dihydroxytéréphthalate), selon le mode opératoire indiqué dans la demande WO 2010/139889. Le luminophore est déposé dans l'intercalaire correspondant à une portion rectangulaire du vitrage de dimensions 20×10 cm avec une concentration de l'ordre de $5.10^{-4}$ g/cm$^2$.
Sur la partie du vitrage tournée vers l'intérieur de l'habitacle, on dépose différents revêtements antireflets tel qu'indiqué dans la suite de la description. Un vitrage démuni de toute couche antireflet sur sa surface interne est utilisé comme référence pour la mesure de l'efficacité de la protection.

**Exemple de référence :**

Dans ce vitrage de référence, on n'applique aucun revêtement anti-reflet sur un vitrage tel que décrit précédemment incluant les deux feuilles de verre avec leur intercalaire. Le rayonnement laser à 405 nm est dirigé vers la portion du vitrage concentrant les luminophores pour l'absorption et la conversion de la majeure partie d'un rayonnement laser à 405 nm.
La face du vitrage exposée à ce rayonnement laser est constituée de verre dont l'indice de réfraction est de 1,54 à 405 nm. Le coefficient de réflexion est d'environ 4,5% à 405 nm.
Les exemples qui suivent diffèrent de l'exemple de référence en ce que diffèrents types de revêtements antireflets sont déposés sur la face interne de la feuille de verre clair Planilux®. On détermine de la façon indiquée précédemment le niveau de risque R en fonction de la puissance initiale appliquée à la source laser.

**Exemple 1 :**

Dans ce premier vitrage selon l'invention, l'empilement antireflet déposé est constitué de deux couches dont :

- une première couche déposée directement sur la surface de verre intérieure et constituée de nitrure de silicium (SiN) contenant une faible proportion d'aluminium, d'indice de réfraction d'environ 2.0 pour un rayonnement incident de longueur d'onde égale à 405nm. L'épaisseur de cette couche est d'environ 24 nm.
- une deuxième couche déposée sur la couche de nitrure de silicium et constituée d'oxyde de silicium (SiO) contenant une faible proportion d'aluminium, d'indice environ égal à 1.5 à 405nm. L'épaisseur de cette couche est de 87nm.

Les deux couches sont déposées préalablement à la formation du vibrage feuilleté sur la face appropriée de la feuille de verre planilux selon les techniques habituelles et bien connues du dépôt magnétron par pulvérisation cathodique des deux couches respectivement à partir :

- d'une cible de silicium comprenant 8% poids aluminium dans une atmosphère azotée pour la couche de nitrure de silicium et
- d'une cible de silicium comprenant 8% poids aluminium dans une atmosphère contenant de l'oxygène pour la couche d'oxyde de silicium.

**Exemple 2 :**

Dans ce second vitrage selon l'invention, l'empilement antireflet déposé est constitué de deux couches constituées dans les mêmes matériaux et déposées selon un mode opératoire identique au précédemment mais avec des épaisseurs différentes et en particulier:

- Une première couche déposée directement sur la surface de verre intérieure et constituée de nitrure de silicium,

contenant une faible proportion d'aluminium. L'épaisseur de cette couche est de 12 nm.

- Une deuxième couche déposée sur la couche de nitrure de silicium et constituée d'oxyde de silicium contenant une faible proportion d'aluminium. L'épaisseur de cette couche est de 99 nm.

**Exemple 3 :**

Dans ce troisième vitrage selon invention, l'empilement antireflet déposé est constitué de deux couches constituées dans les mêmes matériaux et déposées selon un mode opératoire identique au précédemment mais avec des épaisseurs différentes dont:

- Une première couche déposée directement sur la surface et constituée de nitrure de silicium contenant une faible proportion d'aluminium. L'épaisseur de cette couche est de 28 nm,
- une deuxième couche déposée sur la couche de nitrure de silicium et constituée d'oxyde de silicium contenant une faible proportion d'aluminium. L'épaisseur de cette couche est de 83 nm.

Les vitrages obtenues selon les exemples précédents sont ensuite soumis à un rayonnement laser dirigée vers la zone comprenant le luminophore.

Le projecteur utilisé pour l'illumination du vitrage est constitué par une diode laser émettant un faisceau concentré monochromatique à 405 nm polarisé transverse magnétique. L'ouverture angulaire de la source est de l'ordre de 5°. La diode présente une alimentation réglable de telle façon que la puissance du faisceau généré soit modulable.

Le faisceau est orienté vers la portion rectangulaire du vitrage comprenant le luminophore, de telle façon qu'il rencontre le revêtement antireflet avant de traverser le verre clair constituant le première feuille.

Selon un premier dispositif, l'angle d'incidence moyen $\theta_1$ du faisceau sur le pare-brise est fixe et égal à 25°, en tenant compte de la courbure et de l'inclinaison de celui-ci.

Selon un second dispositif, l'angle d'incidence moyen $\theta_2$ du faisceau sur le pare-brise est fixe et égal à 45°.

Selon un troisième dispositif, l'angle d'incidence moyen $\theta_3$ du faisceau sur le pare-brise est fixe et égal à 0°, c'est-à-dire que le faisceau incident coïncide avec la normale au vitrage au point d'impact de celui-ci.

On détermine la dangerosité de l'installation HUD par un paramètre ou facteur de risque R, selon la procédure qui suit :

L'intensité de la source est augmentée jusqu'à l'obtention d'une luminance de l'image réelle formée sur le pare-brise supérieure à 3000 Candelas/$m^2$ (luminance initialement considérée comme suffisante pour l'obtention d'une image visible par le conducteur quelque soient les conditions d'ensoleillement). On détermine ensuite la dangerosité du faisceau réfléchi par la surface du faisceau selon les principes décrits dans la norme IEC 60825-1 relative à la sécurité des installations équipées d'un laser. On détermine un facteur de risque R selon le rapport R= E/EMP où E est l'exposition laser perçue par le sujet et EMP l'exposition maximale permise dans les conditions particulières d'utilisation d'un dispositif laser donné.

Selon la norme, une valeur R égale à 1 est la limite acceptable de dangerosité de l'installation. Il est cependant bien évident que les valeurs de R les plus basses possibles, notamment de préférence inférieures à 0,1, sont recherchées selon la présente invention, pour assurer une protection optimale dans le temps voire en prévision d'une sévérisation de ladite norme dans les années futures, au vu de la dangerosité de telles sources lumineuses.

A titre d'exemple, un projecteur laser fonctionnant suivant un mode vectoriel avec une vitesse de balayage de 900 rad/s, équipé d'une diode laser d'une puissance optique de 500mW à 405nm générant un spot de 1mm de diamètre, placé à 1 m du pare-brise, dessinant un contour de 25cm de long, permet d'atteindre une luminance de 3225 cd/$m^2$. Dans ces conditions, l'exposition maximale permise suivant la norme IEC 60825-1 est de EMP = $3{,}63.10^{-4}$ J/$m^2$.

L'exposition mesurée étant égale à E = $3{,}57.10^{-3}$J/$m^2$ pour l'exemple de référence, le facteur de risque laser calculé est alors R = 9,8.

Pour ramener le facteur de risque laser à une valeur de R inférieure à 1 dans le cas de référence, il devient ainsi nécessaire de diminuer la puissance de la source laser à 50mW, ce qui a pour effet de diminuer d'autant la luminance jusqu'à une valeur inacceptable de 323 cd/$m^2$.

Les résultats obtenus pour toutes les configurations testées sont regroupés dans le tableau 1 qui suit, pour l'obtention d'une luminance de l'ordre de 3000 Cd/$m^2$ :

Tableau 1

| Vitrage de l'exemple | Empilement sur le vitrage (à partir de la surface) | Angle d'incidence du rayonnement incident | Epaisseur calculée selon les formules (1) et (2) | Facteur de Risque |
|---|---|---|---|---|
| référence | Néant | 0 | - | 9,8 |
| | | 25 | - | 9,8 |
| | | 45 | - | 9.8 |
| 1 | 24nm SiN 87nm siO | 0 | 28<br>83 | 0.4 |
| | | 25 | 24,25<br>86,75 | <0,1 |
| | | 45 | 12,25<br>98,75 | 1 |
| 2 | 12nm SiN 99nm SiO | 0 | 28<br>83 | 3,3 |
| | | 25 | 24,25<br>86,75 | 1,5 |
| | | 45 | 12,25<br>98,75 | <0,1 |
| 3 | 28nm SiN 83nm SiO | 0 | 28<br>83 | <0,1 |
| | | 25 | 24,25<br>86,75 | 0,3 |
| | | 45 | 12,25<br>98,75 | 1,6 |

Les données reportées dans le tableau 1 montrent que la projection d'un rayonnement incident de type laser sur les vitrages selon les exemples 1 à 3 présentent un facteur de risque acceptable si les épaisseurs des deux couches formant le revêtement antireflet pour ledit rayonnement sont choisies et calibrées selon l'invention en fonction de l'angle d'incidence dudit rayonnement et par application des relations (1) et (2) précédentes. Tout particulièrement, les résultats reportés dans le tableau 1 montrent que l'épaisseur respective des deux couches doit être configurée en fonction de l'angle d'incidence du faisceau incident sur le pare-brise, pour limiter le facteur de risque R, c'est-à-dire en assurant la sécurité des passagers contre la réflexion du rayonnement incident sur la surface verrière.

Dans un tel but, le vitrage selon l'exemple 1 est adapté à un angle moyen d'incidence $\theta$, du faisceau sur le pare-brise de l'ordre de 25° tandis que le vitrage selon l'exemple 2 est adapté à un angle moyen d'incidence $\theta_2$ du faisceau sur le pare-brise de l'ordre de 45°. Le vitrage selon l'exemple 3 est adapté à un angle moyen d'incidence nul du faisceau sur le pare-brise (c'est-à-dire que la normale au vitrage au point d'impact coïncident avec la direction du faisceau incident.

En particulier, on voit dans les résultats reportés dans le tableau qui précède qu'un facteur de risque très faible, en particulier inférieur à 0,1, peut être obtenu par application de la présente invention pour une luminance du signal de l'ordre de 3000 $Cd/m^2$. Dans certains cas de très forte illumination du pare-brise, il devient donc dans ce cas possible d'augmenter sensiblement la luminance du signal pour rendre les informations plus visibles au conducteur ou à l'usager, sans pour autant excéder le facteur de risque R=1 défini dans la norme IEC 60825-1

De telles caractéristiques permettent de sécuriser l'utilisation de sources de rayonnement très concentrées du type laser, dans une application du type HUD pour véhicule (automobile, avion, trains..) ou encore pour la visualisation d'informations sur une vitrine.

## Revendications

1. Dispositif de visualisation d'une image réelle sur un vitrage équipant un habitacle ou une façade, ledit dispositif comprenant :

   - une source d'un rayonnement laser monochromatique polarisé transverse magnétique de longueur d'onde compris entre 380 et 410 nm, en particulier comprise entre 395 et 410 nm,
   - ledit vitrage dont au moins une portion comprend un luminophore absorbant ledit rayonnement pour réémettre une lumière dans le domaine du visible et la visualisation de l'image,

   ladite source de rayonnement étant orientée vers une portion dudit vitrage et balayant celle-ci selon un angle moyen $\theta$ par rapport à la normale audit vitrage,
   dans lequel ledit vitrage est muni sur sa face exposée à ladite source d'un revêtement antireflet constitué par un empilement de deux couches dont, à partir du substrat à fonction verriére :

   - une première couche faite dans un matériau à base d'oxyde de zinc, d'oxyde d'étain, de nitrure de silicium, d'un oxyde de zinc et d'étain, d'un oxyde de silicium et de zirconium, cette première couche ayant une épaisseur $Ep_1$,
   - une deuxième couche faite dans un matériau à base d'oxyde de silicium, comprenant éventuellement en outre du carbone et/ou de l'azote et/ou de l'aluminium, cette deuxième couche ayant une épaisseur $Ep_2$,

   et en ce que les épaisseurs géométriques respectives $Ep_1$ et $Ep_2$ desdites couches sont sensiblement égales à :

   - pour la première couche :

   $$Ep_1 = 26 + 0{,}07(\theta) - 0{,}007(\theta)^2 \qquad (1)$$

   - pour la deuxième couche :

   $$Ep_2 = 83 - 0{,}1(\theta) + 0{,}01(\theta)^2 \qquad (2)$$

2. Dispositif selon la revendication 1, dans lequel le vitrage présente, sur sa face exposée au rayonnement incident, un indice de réfraction compris entre 1,5 et 1,6 pour ledit rayonnement monochromatique.

3. Dispositif selon l'une des revendications précédentes, dans lequel, pour ledit rayonnement monochromatique, le matériau de la première couche de l'empilement présente un indice de réfraction optique compris entre environ 1,9 et environ 2,1, et de préférence est compris entre 1,95 et 2,10 et dans lequel le matériau de la deuxième couche de l'empilement présente un indice de réfraction optique compris entre environ 1,5 et environ 1,6, notamment sensiblement égal à 1,54.

4. Dispositif selon l'une des revendications précédentes, dans laquelle la source génère un rayonnement sensiblement égal à 405 nm.

5. Dispositif selon l'une des revendications précédentes, dans lequel la source comprend au moins une diode laser.

6. Dispositif selon l'une des revendications précédentes, dans lequel le vitrage est un vitrage feuilleté constituée par l'assemblage de deux feuilles de verre collées entre elles par un intercalaire plastique tel que le polyvinyl butyrale (PVB), ledit luminophore étant intégré dans ledit intercalaire.

7. Dispositif selon l'une des revendications précédentes, dans lequel le matériau constituant la première couche est à base d'oxyde de zinc, d'oxyde d'étain, de nitrure de silicium, ou d'un oxyde de zinc et d'étain.

8. Dispositif selon l'une des revendications précédentes, dans lequel la première couche est à base de nitrure de silicium et la deuxième couche est à base d'oxyde de silicium.

9. Dispositif selon l'une des revendications 1 à 7, dans lequel la première couche est à base d'un oxyde de zinc et d'étain et la deuxième couche est à base d'oxyde de silicium.

10. Dispositif selon la revendication précédente, dans lequel le matériau constituant la première couche est un oxyde mixte de zinc et de silicium dont le rapport Sn/Zn est compris entre 50/50 et 85/15, de préférence entre 55/45 et 75/25.

11. Dispositif selon l'une des revendications précédentes, dans lequel l'angle moyen $\theta$ est compris entre 0 et 50°.

12. Habitacle par exemple de véhicule automobile, d'avion ou de train comprenant un dispositif de visualisation ou un vitrage tel que décrit dans l'une des revendications précédentes.

13. Méthode de mise en oeuvre d'un dispositif de visualisation d'une image réelle sur un vitrage équipant un habitacle ou une façade, comprenant :

- une source d'un rayonnement laser monochromatique polarisé transverse magnétique compris entre 380 et 410 nm, en particulier entre 395 et 410 nm, orientée vers la ou lesdites portions,
- ledit vitrage dont au moins une portion comprend un luminophore absorbant ledit rayonnement pour réémettre une lumière dans le domaine du visible et la visualisation de l'image,
- ladite source de rayonnement étant orientée vers ledit vitrage et balayant celui-ci selon un angle moyen $\theta$ par rapport à la normale audit vitrage,

dans lequel on applique sur la face du vitrage exposée à ladite source un revêtement antireflet constitué par un empilement de deux couches dont, à partir du substrat à fonction verrière, en particulier d'indice de réfraction optique compris entre 1,5 et 1,6, notamment sensiblement égal à 1,54, pour le rayonnement monochromatique:

- une première couche faite dans un matériau à base d'oxyde de zinc, d'oxyde d'étain, de nitrure de silicium, d'un oxyde de zinc et d'étain, d'un oxyde de silicium et de zirconium en particulier dont l'indice de réfraction optique pour le rayonnement monochromatique incident est compris entre environ 1,9 et environ 2,1, et de préférence est compris entre 1,95 et 2,10, cette première couche ayant une épaisseur $Ep_1$,
- une deuxième couche faite dans un matériau à base d'un oxyde de silicium, comprenant éventuellement en outre du carbone et/ou de l'azote et/ou de l'aluminium, en particulier d'indice de réfraction optique, pour le rayonnement monochromatique incident, compris entre 1,5 et 1,6, notamment sensiblement égal à 1,54, cette deuxième couche ayant une épaisseur $Ep_2$,

et dans lequel les épaisseurs géométriques respectives $Ep_1$ et $Ep_2$ desdites couches sont sensiblement ègales à :

- pour la première couche:

$$Ep_1 = 26 + 0,07(\theta) - 0,007\ (\theta)^2 \qquad (1)$$

- pour la deuxième couche :

$$Ep_2 = 83 - 0,1(\theta) + 0,01\ (\theta)^2 \qquad (2).$$

**Patentansprüche**

1. Vorrichtung zur Anzeige eines realen Bildes auf einer Verglasung, mit der ein Karosseriegehäuse oder eine Fassade versehen ist, wobei die Vorrichtung Folgendes umfasst:

- eine Quelle einer magnetischen, transversalen, polarisierten, monochromatischen Laserstrahlung mit einer Wellenlänge zwischen 380 und 410 nm, insbesondere zwischen 395 und 410 nm,
- die Verglasung, von der mindestens ein Abschnitt ein Luminophor umfasst, das die Strahlung absorbiert, um ein Licht wieder in den sichtbaren Bereich zu entsenden und die Anzeige des Bildes zu ermöglichen,

wobei die Strahlungsquelle zu einem Abschnitt der Verglasung gerichtet ist, und diese in einem mittleren Winkel $\theta$ in Bezug zur Normalen auf die Verglasung abtastet,
wobei die Verglasung auf ihrer der Quelle ausgesetzten Seite mit einer Antireflex-Verkleidung versehen ist, die von einer Stapelung von zwei Schichten gebildet ist, und zwar auf Basis des Substrats mit Glasfunktion:

- einer ersten Schicht, die aus einem Material auf Basis von Zinkoxid, Zinnoxid, Siliziumnitrid, oder aus Zink- und Zinnoxid, Silizium- und Zirkoniumoxid gebildet ist, wobei diese erste Schicht eine Dicke $Ep_1$ hat,
- einer zweiten Schicht, die aus einem Material auf Basis von Siliziumoxid gebildet ist, umfassend eventuell ferner Kohlenstoff und/oder Stickstoff und/oder Aluminium, wobei diese zweite Schicht eine Dicke $Ep_2$ hat,

und wobei die jeweiligen geometrischen Dicken $Ep_1$ und $Ep_2$ der Schichten im Wesentlichen gleich sind:

- für die erste Schicht:

$$Ep_1 = 26 + 0{,}07(\theta) - 0{,}007(\theta)^2 \qquad (1)$$

- für die zweite Schicht:

$$Ep_2 = 83 - 0{,}1(\theta) + 0{,}01(\theta)^2 \qquad (2).$$

**2.** Vorrichtung nach Anspruch 1, bei der die Verglasung auf ihrer der eintreffenden Strahlung ausgesetzten Seite einen Brechungsindex zwischen 1,5 und 1,6 für die monochromatische Strahlung aufweist.

**3.** Vorrichtung nach einem der vorhergehenden Ansprüche, bei der für die monochromatische Strahlung das Material der ersten Schicht der Stapelung einen optischen Brechungsindex zwischen ungefähr 1,9 und ungefähr 2,1 aufweist, und vorzugsweise zwischen 1,95 und 2,10 beträgt, und bei der das Material der zweiten Schicht der Stapelung einen optischen Brechungsindex zwischen ungefähr 1,5 und ungefähr 1,6 aufweist, der insbesondere im Wesentlichen gleich 1,54 ist.

**4.** Vorrichtung nach einem der vorhergehenden Ansprüche, bei der die Quelle eine Strahlung im Wesentlichen gleich 405 nm erzeugt.

**5.** Vorrichtung nach einem der vorhergehenden Ansprüche, bei der die Quelle mindestens eine Laserdiode umfasst.

**6.** Vorrichtung nach einem der vorhergehenden Ansprüche, bei der die Verglasung eine Verbundverglasung ist, die durch den Zusammenbau von zwei Glasscheiben gebildet ist, die miteinander mit einer Zwischenschicht aus Kunststoff, wie Polyvinyl-Butyral (PVB), verklebt sind, wobei das Luminophor in die Zwischenschicht integriert ist.

**7.** Vorrichtung nach einem der vorhergehenden Ansprüche, bei der das Material, aus dem die erste Schicht gebildet ist, auf Basis von Zinkoxid, Zinnoxid, Siliziumnitrid oder aus einem Zink- oder Zinnoxid ist.

**8.** Vorrichtung nach einem der vorhergehenden Ansprüche, bei der die erste Schicht auf Basis von Siliziumnitrid und die zweite Schicht auf Basis von Siliziumoxid ist.

**9.** Vorrichtung nach einem der Ansprüche 1 bis 7, bei der die erste Schicht auf Basis eines Zink- oder Zinnoxids und die zweite Schicht auf Basis von Siliziumoxid ist.

**10.** Vorrichtung nach dem vorhergehenden Anspruch, bei der das Material, aus dem die erste Schicht gebildet ist, ein gemischtes Zink- und Siliziumoxid ist, wobei das Verhältnis Sn/Zn zwischen 50/50 und 85/15, vorzugsweise zwischen 55/45 und 75/25 beträgt.

**11.** Vorrichtung nach einem der vorhergehenden Ansprüche, bei der der mittlere Winkel $\theta$ zwischen 0 und 50° beträgt.

**12.** Karosseriegehäuse beispielsweise eines Kraftfahrzeugs, eines Flugzeugs oder eines Zuges, umfassend eine Anzeigevorrichtung oder eine Verglasung, wie in einem der vorhergehenden Ansprüche beschrieben.

**13.** Methode für den Einsatz einer Vorrichtung zur Anzeige eines realen Bildes auf einer Verglasung, mit der ein Karosseriegehäuse oder eine Fassade versehen ist, umfassend:

- eine Quelle einer magnetischen, transversalen, polarisierten, monochromatischen Laserstrahlung zwischen 380 und 410 nm, insbesondere zwischen 395 und 410 nm, die zu dem oder den Abschnitten gerichtet ist,
- die Verglasung, von der mindestens ein Abschnitt ein Luminophor umfasst, das die Strahlung absorbiert, um ein Licht wieder in den sichtbaren Bereich zu entsenden und die Anzeige des Bildes zu ermöglichen,
- die Strahlungsquelle, die zu der Verglasung gerichtet ist und diese in einem mittleren Winkel $\theta$ in Bezug zur Normalen auf die Verglasung abtastet,

bei der auf die Seite der Verglasung, die der Quelle ausgesetzt ist, eine Antireflex-Verkleidung aufgebracht wird, die von einer Stapelung von zwei Schichten gebildet ist, und zwar auf Basis des Substrats mit Glasfunktion, insbesondere mit einem optischen Brechungsindex zwischen 1,5 und 1,6, insbesondere im Wesentlichen gleich 1,54, für die monochromatische Strahlung:

- einer ersten Schicht, die aus einem Material auf Basis von Zinkoxid, Zinnoxid, Siliziumnitrid, oder aus Zink- und Zinnoxid, Silizium- und Zirkoniumoxid gebildet ist, bei der insbesondere der optische Brechungsindex für die eintreffende monochromatische Strahlung zwischen ungefähr 1,9 und ungefähr 2,1 liegt und vorzugsweise zwischen 1,95 und 2,10 beträgt, wobei diese erste Schicht eine Dicke $Ep_1$ hat,
- einer zweiten Schicht, die aus einem Material auf Basis von Siliziumoxid gebildet ist, umfassend eventuell ferner Kohlenstoff und/oder Stickstoff und/oder Aluminium, bei der insbesondere der optische Brechungsindex für die eintreffende monochromatische Strahlung zwischen 1,5 und 1,6 beträgt, insbesondere im Wesentlichen gleich 1,54 ist, wobei diese zweite Schicht eine Dicke $Ep_2$ hat,

und wobei die jeweiligen geometrischen Dicken $Ep_1$ und $Ep_2$ der Schichten im Wesentlichen gleich sind:

- für die erste Schicht:

$$Ep_1 = 26 + 0,07(\theta) - 0,007(\theta)^2 \qquad (1)$$

- für die zweite Schicht:

$$Ep_2 = 83 - 0,1(\theta) + 0,01(\theta)^2 \qquad (2).$$

## Claims

**1.** A device for displaying a real image on a glazing unit of a passenger compartment or a facade, said device comprising:

- a source of monochromatic, transverse magnetic polarized laser radiation of wavelength comprised between 380 and 410 nm and in particular between 395 and 410 nm; and
- said glazing unit, at least one portion of which comprises a luminophore that absorbs said radiation in order to reemit light in the visible range and display the image,

said radiation source being oriented toward a portion of said glazing unit and scanning said portion so as to make a mean angle $\theta$ to the normal to said glazing unit,
in which said glazing unit is equipped on its face exposed to said source with an antireflection coating consisting of a stack of two layers, namely, starting from the glazing function substrate:

- a first layer made of a material based on zinc oxide, tin oxide, silicon nitride, a zinc tin oxide or a zirconium silicon oxide, this first layer having a thickness $Ep_1$; and
- a second layer made of a material based on silicon oxide, optionally furthermore comprising carbon and/or

nitrogen and/or aluminum, this second layer having a thickness $Ep_2$,

and in that the respective geometric thicknesses $Ep_1$ and $Ep_2$ of said layers are substantially equal to:

- for the first layer:

$$Ep_1 = 26 + 0.07(\theta) - 0.007(\theta)^2 \qquad (1)$$

- for the second layer:

$$Ep_2 = 83 - 0.1(\theta) + 0.01(\theta)^2 \qquad (2).$$

**2.** The device as claimed in claim 1, in which the glazing unit has, on its face exposed to the incident radiation, a refractive index comprised between 1.5 and 1.6 for said monochromatic radiation.

**3.** The device as claimed in one of the preceding claims, in which, for said monochromatic radiation, the material of the first layer of the stack has an optical refractive index comprised between about 1.9 and about 2.1 and preferably between 1.95 and 2.10 and in which the material of the second layer of the stack has an optical refractive index comprised between about 1.5 and about 1.6 and is especially substantially equal to 1.54.

**4.** The device as claimed in one of the preceding claims, in which the source generates radiation at substantially 405 nm.

**5.** The device according to one of the preceding claims, in which the source comprises at least one laser diode.

**6.** The device as claimed in one of the preceding claims, in which the glazing unit is a laminated glazing unit formed by joining two glass panes adhesively bonded to each other by an interlayer of a plastic such as polyvinyl butyral (PVB), said luminophore being integrated into said interlayer.

**7.** The device as claimed in one of the preceding claims, in which the material from which the first layer is made is based on zinc oxide, tin oxide, silicon nitride or a zinc tin oxide.

**8.** The device as claimed in one of the preceding claims, in which the first layer is based on silicon nitride and the second layer is based on silicon oxide.

**9.** The device as claimed in one of claims 1 to 7, in which the first layer is based on zinc tin oxide and the second layer is based on silicon oxide.

**10.** The device as claimed in the preceding claim, in which the material from which the first layer is made is a mixed zinc silicon oxide the Sn/Zn ratio of which is comprised between 50/50 and 85/15 and preferably between 55/45 and 75/25.

**11.** The device as claimed in one of the preceding claims, in which the mean angle $\theta$ is comprised between 0 and 50°.

**12.** A passenger compartment, for example a passenger compartment of an automotive vehicle, airplane or train, comprising a display device or a glazing unit such as described in one of the preceding claims.

**13.** A method for implementing a device for displaying a real image on a glazing unit of a passenger compartment or a facade, comprising:

- a source of monochromatic, transverse magnetic polarized laser radiation comprised between 380 and 410 nm and in particular between 395 and 410 nm, which source is oriented toward said one or more portions; and
- said glazing unit, at least one portion of which comprises a luminophore that absorbs said radiation in order to reemit light in the visible range and display the image,
- said radiation source being oriented toward said glazing unit and scanning the latter so as to make a mean angle $\theta$ to the normal to said glazing unit,

in which an antireflection coating consisting of a stack of two layers is applied to that face of the glazing unit which is exposed to said source, said two layers being, starting from the glazing function substrate, in particular of optical refractive index comprised between 1.5 and 1.6 and especially substantially equal to 1.54, for the monochromatic radiation:

- a first layer made of a material based on zinc oxide, tin oxide, silicon nitride, a zinc tin oxide or a zirconium silicon oxide, the optical refractive index of which for the incident monochromatic radiation is in particular comprised between about 1.9 and about 2.1 and preferably between 1.95 and 2.10, this first layer having a thickness $Ep_1$; and
- a second layer made of a material based on silicon oxide, optionally furthermore comprising carbon and/or nitrogen and/or aluminum, the optical refractive index of which for the incident monochromatic radiation is in particular comprised between 1.5 and 1.6 and is especially substantially equal to 1.54, this second layer having a thickness $Ep_2$,

and in which the respective geometric thicknesses $Ep_1$ and $Ep_2$ of said layers are substantially equal to:

- for the first layer:

$$Ep_1 = 26 + 0.07(\theta) - 0.007(\theta)^2 \qquad (1)$$

- for the second layer:

$$Ep_2 = 83 - 0.1(\theta) + 0.01(\theta)^2 \qquad (2).$$

FIGURE 1

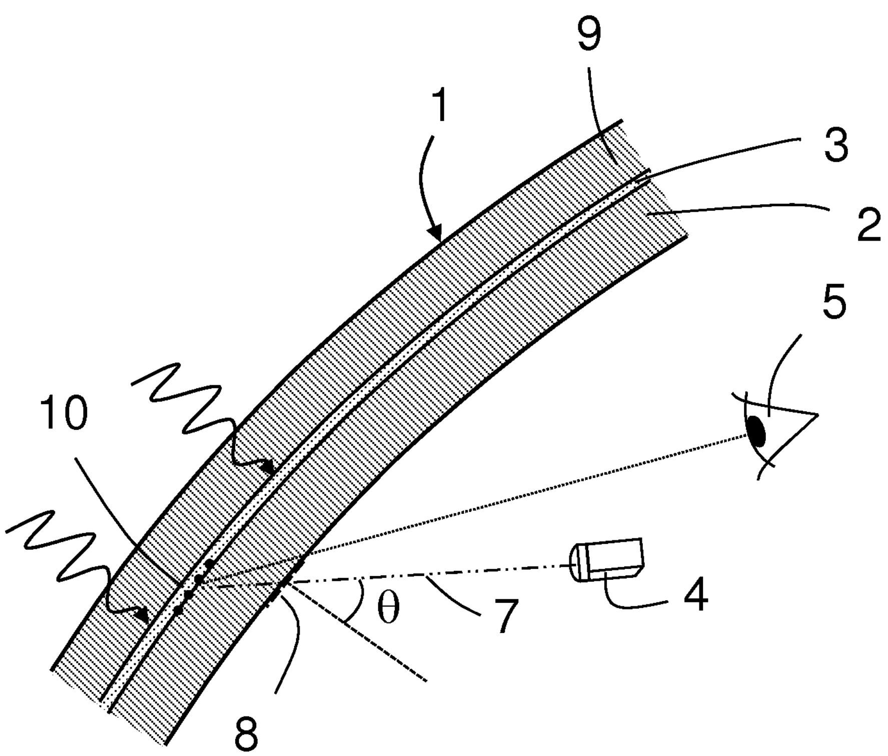

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5013134 A
- EP 2131227 A
- US 6979499 B2
- WO 2010139889 A
- WO 2009122094 A
- US 2005231652 A
- US 20040232826 A